# EUROPEAN PATENT APPLICATION

(11) **EP 2 178 015 A2**
(43) Date of publication of application: **21.04.2010**
(21) Application number: 09172269.4
(22) Date of filing: 06.10.2009
(51) Int. Cl.: G06F 21/00

(54) **Method and system for processing forward-locked DRM contents, and portable device adapted thereto**

(30) Priority: 09.10.2008 KR 20080098980
(71) Applicant: SAMSUNG ELECTRONICS CO., LTD., Suwon-si, Gyeonggi-do (KR)
(72) Inventor: Choi, Tae Hwa, Gyeonggi-do Suwon-si (KR)
(74) Representative: Ketelaars, Maarten F.J.M.

(57) **Abstract**

A method and system and a portable device are disclosed that can process forward-locked DRM contents in a portable device. The method includes receiving forward-locked Digital Rights Management (DRM) contents, encrypting the forward-locked DRM contents using a unique number of the portable device, and storing the encrypted forward-locked DRM contents. The encrypting process includes extracting the unique number, setting the unique number as an encrypting key, and encrypting the forward-locked DRM contents using the encrypting key. Therefore, although the portable device lacks the capacity of the internal storage medium thereof, it can store a large amount of contents in mobile storage media connectable thereto.

## Description

### TECHNICAL FIELD OF THE INVENTION

The present invention relates to Digital Rights Management (DRM). More particularly, this invention relates to a method and system that encrypts DRM contents using a unique number related to a portable device and stores the DRM contents in a mobile storage medium if the DRM contents are forward-locked. It also relates to a portable device adapted to the method and system.

### BACKGROUND OF THE INVENTION

In recent years, digital rights management (DRM) has been actively researched, and accordingly commercial services employing DRM have been introduced or are being introduced. Unlike analog data, digital data can be copied without loss and can also be easily reused or processed. In particular, digital data can be easily distributed to third party. The copy and distribution of digital data can be achieved at relatively low costs. On the contrary, it requires relatively high costs, engineers' input, and a great deal of time to produce digital contents based on digital data. Therefore, technology needs to protect digital contents rights. To this end, DRM is being applied to a variety of areas.

In DRM standard of Open Mobile Alliance (OMA), concepts of forward lock, combined delivery, and separate delivery are introduced to protect a variety of digital rights and thus to prevent digital data from being illegally distributed to third party. The combined delivery serves to prevent contents from being reproduced by a user who does not possess the rights to do, where the contents are combined with the rights object. The separate delivery serves to prevent contents from being reproduced by a user who does not possess the right to do. The rights object is delivered to users, separately but together with contents, when the contents are transmitted to users. The forward lock serves to prevent data, downloaded by a portable device, irrespective of rights, from being transmitted to other portable devices.

Forward-locked contents, according to the OMA standard, cannot be transmitted to or copied to other portable devices. Therefore, if the portable device lacks the capacity in its internal storage medium, the conventional system must delete existing contents from the portable device and then download and store new contents therein. In addition, if the conventional portable device intends to store the contents only in its internal storage medium, it must extend the capacity of the internal storage medium, which causes an increase in the cost of the parts.

To resolve these problems, a new technique is required to subordinate forward-locked contents to the portable devices and to support an inherent function of forward lock although the contents are stored in a mobile storage medium.

### SUMMARY OF THE INVENTION

To address the above-discussed deficiencies of the prior art, it is a primary object to provide a technique that can process forward-locked DRM contents in a portable device and store the contents in a mobile storage medium.

The present invention further provides a technique that can prevent the contents, processed and stored by the above technique, from being reproduced in other portable devices.

In accordance with an exemplary embodiment of the present invention, the present invention provides a method for processing contents in a portable device including: downloading the contents; encrypting the contents using a unique number of the portable device; and storing the encrypted contents.

Preferably, the method further includes: determining whether an encrypting key of the encrypted contents is consistent with the unique number of the portable device; decrypting the encrypted contents using the encrypting key if an encrypting key is consistent with the unique number; and reproducing the decrypted contents.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a view describing the classification of a content providing method defined in the OMA DRM 1.0 standard;

FIGURE 2 is a schematic block diagram illustrating a DRM contents providing system according to an embodiment of the present invention;

FIGURE 3 is a schematic block diagram illustrating an encrypted forward-locked DRM content, stored in a portable terminal, according to an embodiment of the present invention;

FIGURE 4 is a schematic block diagram illustrating a portable terminal that can download and reproduce a forward-locked DRM content, encrypted with a portable terminal unique number, according to an embodiment of the present invention;

FIGURE 5 is a flow chart describing a method for downloading and storing a forward-locked DRM content in a portable terminal according to an embodiment of the present invention; and

FIGURE 6 is a flow chart describing a method for reproducing a forward-locked DRM content, stored in a memory built in a portable terminal or a mobile storage medium connected to a portable terminal, according to an embodiment of the present invention.

### DETAILED DESCRIPTION OF THE INVENTION

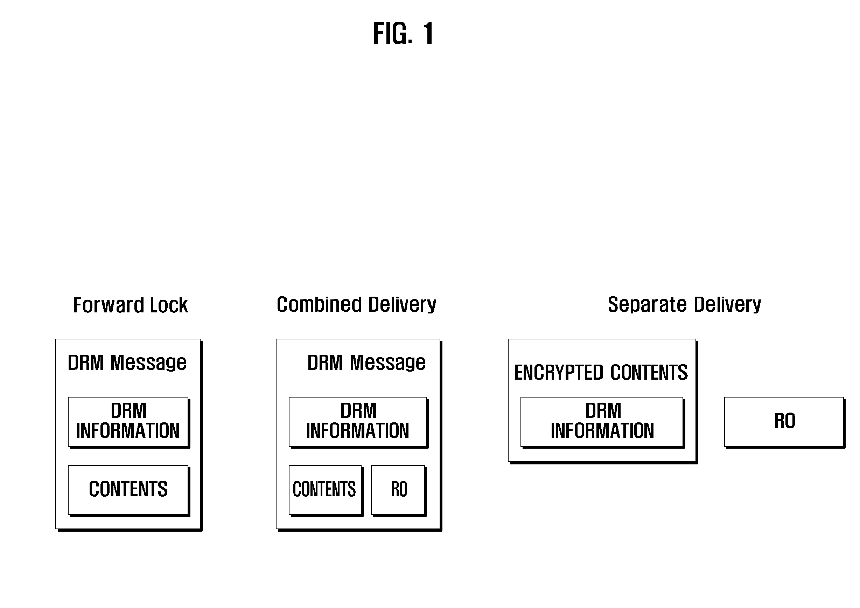

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communications system.

Prior to explaining the embodiments of the present invention, terminologies will be defined for the present description below:

The terms or words described in the present description and the claims should not be limited by a general or lexical meaning, instead should be analyzed as a meaning and a concept through which the inventor defines and describes the present invention at his most effort, to comply with the idea of the present invention. Therefore, one skilled in the art will understand that the embodiments disclosed in the description and configurations illustrated in the drawings are only preferred embodiments, instead there may be various modifications, alterations, and equivalents thereof to replace the embodiments at the time of filing this application.

For example, a unique number refers to a number to distinguish between portable devices, such as numbers, letters, or a combination of numbers and letters, etc. In an embodiment of the present invention, the unique number refers to an International Mobile Equipment Identity (IMEI) stored in a portable device, etc. The IMEI includes a manufacturer, a model name, a serial number, etc., as a unique value according to respective devices.

FIGURE 1 is a view describing classification of a content providing method defined in the OMA DRM 1.0 standard.

Referring to FIGURE 1, the OMA DRM 1.0 standard supports three types of content providing methods: combined delivery, separate delivery, and forward lock. DRM contents are provided in a format of DRM message.

Combined delivery provides contents that are combined with rights object in which reproducible frequency, reproducible time period, etc., are recorded. Combined delivery allows contents to be reproduced only if a DRM agent is connected to an authentication server, etc. and authentication of the rights object is successful. Combined delivery can provide a variety of charging methods by variously setting rights object.

Separate delivery provides contents and rights object separately. Contents are encrypted in a DRM content format and then stored. The encrypted contents can be decrypted only by a content encryption key (CEK) included in the rights object. That is, the separate delivery provides contents and rights object to a service provider separately, so that the service provider can manage only the rights object and provide a variety of charging services.

The forward-lock method provides only contents without license information such as rights object, etc. Forward-locked DRM contents only provide a function to the DRM information, where the function is to prevent a portable device from accessing the contents if the portable device intends to transmit or copy the contents to other portable devices.

The method for processing contents in a portable device, according to the present invention, can encrypt forward-locked DRM contents using a unique number of the portable device and can then subordinate the forward-locked DRM contents to the portable device.

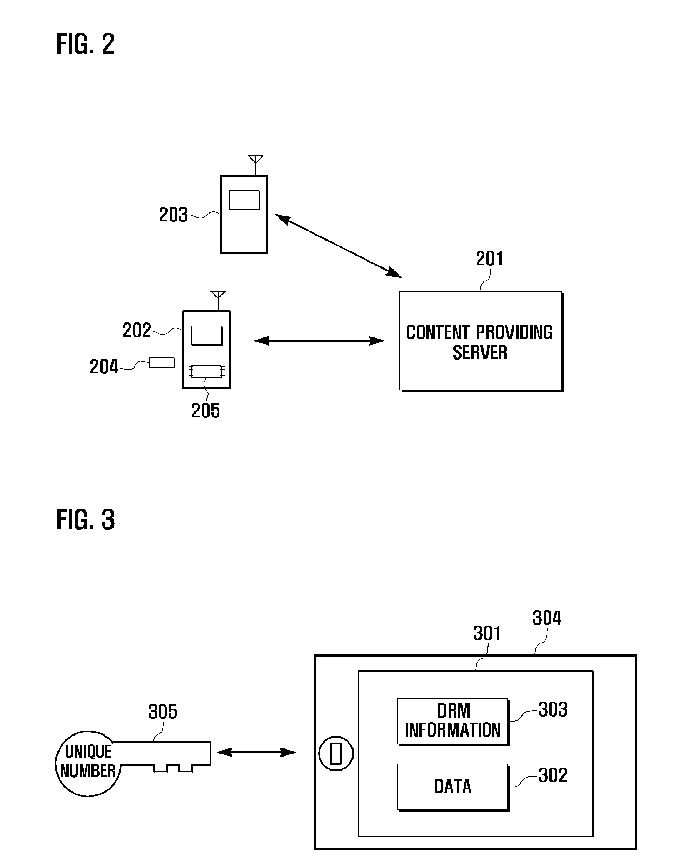

FIGURE 2 is a schematic block diagram illustrating a DRM content providing system according to an embodiment of the present invention.

Referring to FIGURE 2, the DRM content providing system includes a content providing server 201, a first portable device 202, a second portable device 203, and a mobile storage medium 204 connectable to the first portable device 202.

The content providing server 201 establishes a communication channel with the first portable device 202 and provides DRM contents thereto. In particular, it provides forward-locked DRM contents to the first portable device 202, so that the contents cannot be transmitted or copied from the first portable device 202 to other portable devices (for example, the second portable device 203).

The first portable device 202 receives forward-locked DRM contents from the content providing server 201. It also extracts its own unique number. It encrypts the forward-locked DRM contents with the extracted unique number as an encrypting key. It can also store the encrypted forward-locked DRM contents in an internal storage medium 205 or in the mobile storage medium 204. It compares its unique number with the encrypting key of the encrypted forward-locked DRM contents in order to reproduce the encrypted forward-locked contents stored in the internal storage medium 205 or the mobile storage medium 204. When the unique number is consistent with the encrypting key, the first portable device 202 decrypts the encrypted forward-locked DRM contents and then reproduces them.

The mobile storage medium 204, connectable to the first portable device 202, can be connected to the second portable device 203. Although the mobile storage medium 204 can be connectable to the first and second portable devices 202 and 203, since the unique number of the second portable device 203 is inconsistent with the encrypting key of the encrypted forward-locked DRM contents stored in the mobile storage medium 204, the second portable device 203 cannot reproduce the encrypted forward-locked DRM contents.

FIGURE 3 is a schematic block diagram illustrating an encrypted forward-locked DRM content, stored in a portable terminal, according to an embodiment of the present invention.

Referring to FIGURE 3, the forward-locked DRM contents are transmitted, in the format of a DRM message 301, from the content providing server to the portable devices. The DRM message 301 contains DRM information 303 and data 302. DRM information 303 contains information regarding forward lock, preventing the data 302 from being transmitted or copied to other portable devices. The portable device stores the forward-locked DRM contents in an internal storage medium of the portable device or in a mobile storage medium connected to the portable device, where the stored forward-locked DRM contents is encrypted in a format 304 with a unique number 305 of the portable device as an encrypting key.

The portable device compares its unique number with the encrypting key of the encrypted forward-locked DRM contents in order to reproduce the encrypted forward-locked contents stored in the internal storage medium or the mobile storage medium. When the unique number is consistent with the encrypting key, the first portable device decrypts the encrypted forward-locked DRM contents and then reproduces them. Therefore, although the mobile storage medium is connected to another portable device to reproduce the contents, if the unique number of the other portable device is inconsistent with the encrypting key of the contents, the other portable device cannot reproduce the contents. That is, the forward lock function for the contents can be achieved inherently.

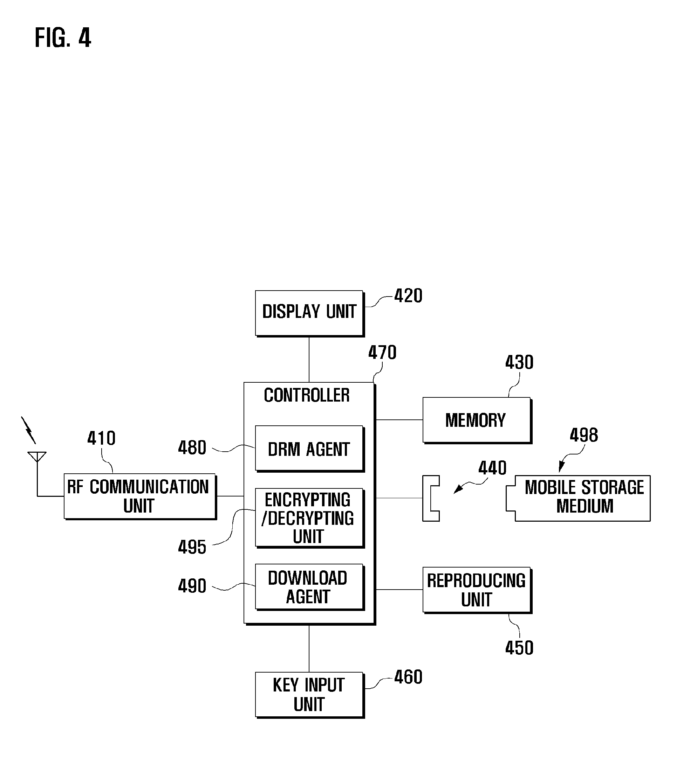

FIGURE 4 is a schematic block diagram illustrating a portable terminal that can download and reproduce a forward-locked DRM content, encrypted with a portable terminal unique number, according to an embodiment of the present invention.

Referring to FIGURE 4, the portable device includes a Radio Frequency (RF) communication unit 410, a display unit 420, a memory 430, an interface unit 440 connectable to a mobile storage medium 498, a reproducing unit 450, a key input unit 460, and a controller 470. The controller 470 includes a DRM agent 480, a download agent 490, and an encrypting/decrypting unit 495.

The RF communication unit 410 is configured to include an RF transmitter for up-converting the frequency of transmitted signals and amplifying the transmitted signals and an RF receiver for low-noise amplifying received RF signals and down-converting the frequency of the received RF signals. In particular, the RF communication unit 410 establishes a communication channel with the content providing server and receives DRM contents therefrom according to the control of the controller 470.

The display unit 420 displays a variety of data and operating states of the portable device. It may be implemented with a Liquid Crystal Display (LCD). If the display unit 420 is implemented with a touch screen, it may also serves as an input unit.

The memory 430 stores application programs required to operate the portable device and data generated as the portable device is operated. In an embodiment of the present invention, the memory 430 can store forward-locked DRM contents that are received from the content providing server and encrypted with a unique number of the portable device.

The interface unit 440 is detachably connectable to a mobile storage medium 498. The mobile storage medium 498 can store encrypted contents via the interface unit 440.

The reproducing unit 450 serves to reproduce video/audio data. That is, it can output audio data via a speaker. It can also reproduce video data, outputting video signals to the display unit and audio signals to the speaker.

The key input unit 460 receives information related to a user's setting and controlling operations and outputs key input signals. It is configured to include a plurality of number keys, letter keys and/or function keys to receive numerical or character information and to set a variety of functions.

The controller 470 controls the operation of downloading forward-locked DRM contents and activating a forward lock function on the downloaded DRM contents. The controller 470 can also activate a basic function, such as a voice call, and an optional function in response to input signals of the key input unit 460. In particular, the encrypting/decrypting unit 495 of the controller 470 can extract a unique number of the portable device and encrypt the forward-locked DRM contents with the extracted unique number as an encrypting key. The encrypting/decrypting unit 495 decrypts the encrypted forward-locked DRM contents only if the unique number of the portable device is consistent with the encrypting key of the encrypted forward-locked DRM contents but outputs a reproduction impossible message stating that it cannot reproduce the contents if the unique number is not consistent with the encrypting key.

In an embodiment of the present invention, the controller 470 may include a DRM agent 480 and a download agent 490 to manage forward-locked DRM contents.

The DRM agent 480 determines permissible items and restricted items, related to the DRM contents, and controls access to DRM contents. In particular, the DRM agent 480 serves to prohibit access to forward-locked DRM contents (for example, transmitting or copying the contents to other devices).

The download agent 490 is connected to the content providing server via the RF communication unit 410 and searches for contents that a user wishes to download. The download agent 490 also controls the RF communication unit 410 so that the searched contents can be downloaded to the portable device.

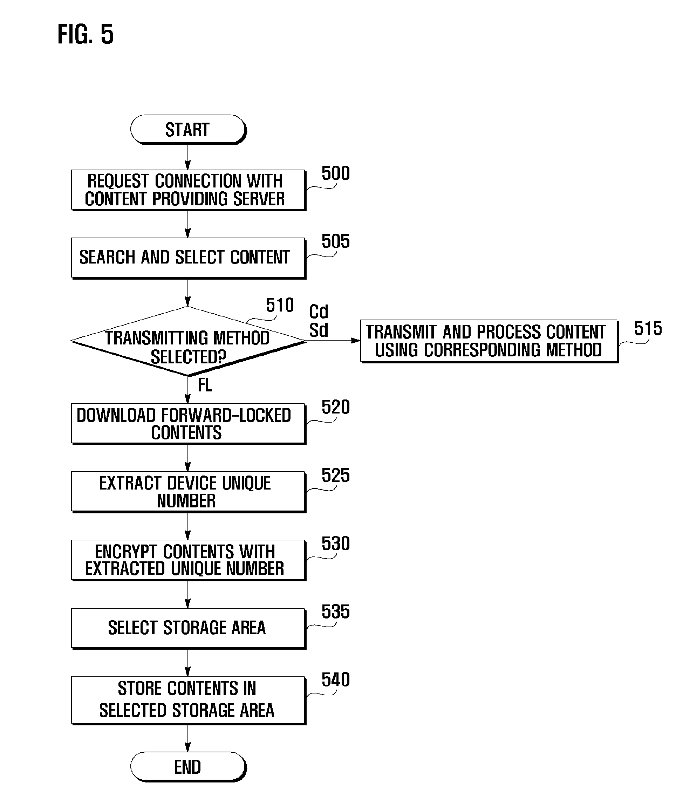

FIGURE 5 is a flow chart describing a method for downloading and storing a forward-locked DRM content in a portable terminal according to an embodiment of the present invention.

Referring to FIGURE 5, a portable device establishes a communication channel with a content providing server (500). The portable device searches for and selects a DRM content that can be provided from the content providing server (505). The portable device transmits a request signal for downloading the selected DRM content to the content providing server. The portable device user selects a providing method for the selected DRM content (510). That is, one of the forward lock, combined delivery, and separated delivery is selected. In an embodiment of the present invention, it is implemented in such a way that a user selects one of the forward lock, combined delivery, and separated delivery. It should be, however, understood that the content providing method (for example, the forward lock) is previously set between the content providing server and the portable device. Due to the OMA standard, the forward-locked DRM contents cannot be transmitted or copied to the devices other than the portable device that received the forward-locked DRM contents.

If another content providing method other than the forward lock has been selected at 510, the contents are provided using the other content providing method (515). In an embodiment of the present invention, if contents are provided by combined delivery or separate delivery, an authentication server is further needed as well as the content providing server, and the contents are provided in a state where they are combined with rights object or where they are separate but together. In an embodiment of the present invention, the content providing method is implemented with the forward lock where contents do not contain rights object. In the application, the description of the content providing methods, combined delivery and separate delivery, will be omitted.

Referring back to the flow chart shown in FIGURE 5, if the forward lock is selected or previously set between the content providing server and the portable device at 510, the portable device downloads the forward-locked DRM contents (520). The portable device extracts its unique number (525). The unique number is assigned to the portable device when it is manufactured, and refers to a serial number or a string used as a means of identification among portable devices. In an embodiment of the present invention, the unique number may include an international mobile equipment identity (IMEI) stored in the portable device.

The extracted unique number of the portable device is set as an encrypting key, and then the forward-locked DRM contents are encrypted by the encrypting key (530). In an embodiment of the present invention, the encrypting is implemented with the AES128_DBS method. It should be, however, understood that the encrypting can be implemented with any encrypting method if data can be encrypted/decrypted using a unique number.

The portable device selects an area for storing the encrypted forward-locked DRM contents (535). That is, the user selects one of the internal storage medium of the portable device and the mobile storage medium connected to the portable device, so that the encrypted forward-locked DRM contents can be stored therein. The portable device stores the encrypted forward-locked DRM contents in the selected storage medium (540). Through these processes, the forward-locked DRM contents are subordinated to the portable device. Therefore, if the encrypting key of the encrypted forward-locked DRM contents is inconsistent with the unique number of the portable device, the encrypted forward-locked DRM contents cannot be decrypted and reproduced by the portable device.

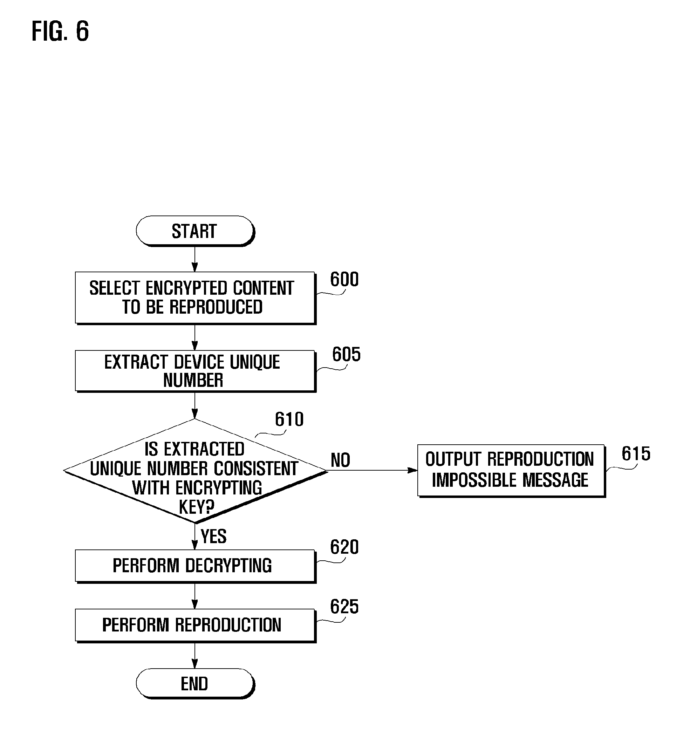

FIGURE 6 is a flow chart describing a method for reproducing a forward-locked DRM content, stored in a memory built in a portable terminal or a mobile storage medium connected to a portable terminal, according to an embodiment of the present invention.

Referring to FIGURE 6, a user selects the encrypted forward-locked DRM contents stored in the internal storage medium of the portable device or in the mobile storage medium connectable to the portable device (600). The portable device extracts its unique number (605). The portable device compares the extracted unique number with an encrypting key of the encrypted forward-locked DRM contents (610). That is, the portable device determines whether the extracted unique number is consistent with an encrypting key of the encrypted forward-locked DRM contents.

If the portable device ascertains that the extracted unique number is inconsistent with an encrypting key at 610, it concludes that the contents are subordinated to another portable device and outputs a reproduction impossible message stating that it cannot reproduce the contents (615). That is, although the mobile storage medium stores a forward-locked DRM contents encrypted by other portable device, since the unique number of the portable device is not consistent with the encrypting key of the forward-locked DRM contents encrypted in the other portable device, the contents cannot be decrypted and reproduced. Therefore, the forward lock function can be inherently performed.

On the contrary, if the portable device ascertains that the extracted unique number is consistent with an encrypting key at 610, it decrypts the encrypted forward-locked DRM contents using its unique number (620). Therefore, the portable device can reproduce the decrypted forward-locked DRM contents through a codec of the reproducing unit (625).

As described above, the technique for processing contents in a portable device, according to the present invention, subordinates the forward-locked DRM contents to the portable device. Therefore, although the portable device lacks the capacity of the internal storage medium thereof, the technique allows the portable device to store a larger amount of contents using mobile storage media connectable to the portable device.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for processing contents in a portable device, comprising:
receiving forward-locked Digital Rights Management (DRM) contents;
encrypting the forward-locked DRM contents using a unique number of the portable device; and
storing the encrypted forward-locked DRM contents.

2. The method of claim 1, wherein the unique number is an International Mobile Equipment Identity (IMEI) stored in the portable device.

3. The method of claim 1, wherein encrypting the forward-locked DRM contents comprises:
extracting the unique number;
setting the unique number as an encrypting key; and
encrypting the forward-locked DRM contents using the encrypting key.

4. The method of claim 1, wherein storing the encrypted forward-locked DRM contents comprises:
selecting an internal memory or an external memory; and
storing the encrypted forward-locked DRM contents in the selected memory.

5. The method of claim 3, further comprising:
determining whether the encrypting key is consistent with the unique number;
decrypting the encrypted forward-locked DRM contents using the encrypting key if the encrypting key is consistent with the unique number; and
reproducing the decrypted forward-locked DRM contents.

6. The method of claim 5, further comprising:
outputting a reproduction impossible message if the encrypting key is not consistent with the unique number.

7. A portable device comprising:
a download controller for receiving forward-locked Digital Rights Management (DRM) contents from a content providing server;
an extracting unit for extracting a unique number from the portable device;
an encrypting unit for encrypting the forward-locked DRM contents using the unique number;
a decrypting unit for decrypting the encrypted forward-locked DRM contents;
a memory for storing the encrypted forward-locked DRM contents; and
an interface unit connectable to a mobile storage medium.

8. The portable device of claim 7, wherein the encrypted forward-locked DRM contents are stored in the memory or in the mobile storage medium.

9. The portable device of claim 7, further comprising:
a reproducing unit for reproducing the decrypted forward-locked DRM contents.

10. The portable device of claim 7, wherein the unique number is an International Mobile Equipment Identity (IMEI) stored in the portable device.

11. The portable device of claim 7, wherein the decrypting unit decrypts the encrypted forward-locked DRM contents if the unique number is consistent with the encrypting key of the encrypted forward-locked DRM contents.

12. The portable device of claim 11, wherein the decrypting unit outputs a reproduction impossible message if the unique number is not consistent with the encrypting key.

13. The portable device of claim 17, wherein the decrypting unit determines whether the unique number is consistent with the encrypting key of the encrypted forward-locked DRM contents.
